# EUROPÄISCHE PATENTANMELDUNG

(11) **EP 4 063 045 A1**
(43) Veröffentlichungstag der Anmeldung: **28.09.2022**
(21) Anmeldenummer: 21164031.3
(22) Anmeldetag: 22.03.2021
(51) Int. Cl.: B22F 10/28, B23K 15/00, B23K 26/342, B33Y 70/00, C22C 19/05

(54) **NICKELBASIS-LEGIERUNGSZUSAMMENSETZUNG FÜR BAUTEILE MIT REDUZIERTER RISSNEIGUNG UND OPTIMIERTEN HOCHTEMPERATUREIGENSCHAFTEN**

(71) Anmelder: Siemens Energy Global GmbH & Co. KG, 81739 München (DE); VDM Metals International GmbH, 58762 Altena (DE)
(72) Erfinder: Dörries, Kai, 38100 Braunschweig (DE); Rösler, Joachim, 38116 Braunschweig (DE); Haberland, Christoph, 44791 Bochum (DE); Burow, Juri, 44789 Bochum (DE); Gehrmann, Bodo, 58840 Plettenberg (DE); Piegert, Sebastian, 03222 Lübbenau (DE)

(57) **Zusammenfassung**

Es wird eine Nickelbasis-Legierungszusammensetzung angegeben, umfassend Nickel als Hauptbestandteil und die weiteren Bestandteile in Gewichtsprozent (Gew.-%): 0,05 bis 0,10 % Kohlenstoff (C), 8 bis 13 % Tantal (Ta), 12 bis 20 % Chrom (Cr), 3 bis 25 % Kobalt (Co), weniger als 0,03 % Mangan (Mn), weniger als 0,03 % Silizium (Si), 0 bis 6 % Molybdän (Mo), weniger als 0,5 % Eisen (Fe), 2 bis 4 % Aluminium (Al), 0,0005 bis 0,1 % Magnesium (Mg), weniger als 0,02 % Vanadium (V), 0 bis 6 % Wolfram (W), weniger als 1 % Titan (Ti), weniger als 0,03 % Yttrium (Y), 0,005 bis 0,015 %Bor (B), weniger als 0,002 % Schwefel (S), 0,005 bis 0,03 % Zirkonium (Zr) und weniger als 3 % Hafnium. Weiterhin werden eine Verwendung derselben für ein additives Herstellungsverfahren, ein Verfahren zur additiven Herstellung eines Bauteils aus einem Pulver der genannten Legierungszusammensetzung, eine entsprechende Zwischenlegierung sowie ein aus der Nickelbasis-Superlegierung bestehendes Bauteil angegeben.

## Beschreibung

Die vorliegende Erfindung betrifft eine Nickelbasis-Superlegierung bzw. Legierungszusammensetzung, eine Verwendung derselben, ein Verfahren zur additiven Herstellung eines Bauteils, wobei ein entsprechendes Legierungspulver zumindest additiv verarbeitet wird, eine entsprechende Zwischenlegierung sowie ein Bauteil, aus der Nickelbasis-Superlegierung.

Das Bauteil ist vorzugsweise für den Einsatz im Heißgaspfad einer Gasturbine vorgesehen. Beispielsweise betrifft das Bauteil eine zu kühlende Komponente mit einem dünnwandigen oder filigranen Design. Alternativ oder zusätzlich kann es sich bei dem Bauteil um eine Komponente für den Einsatz in der Automobilität oder im Luftfahrtsektor handeln.

Im Heißgaspfad von Gasturbinen kommen für Komponenten wie Laufschaufeln, Leitschaufeln oder Ringsegmente insbesondere Nickelbasis-Superlegierungen mit einem hohen Anteil der γ'-Phase (Gammastrichphase) zum Einsatz, um die geforderte Hochtemperaturfestigkeit zu erzielen. Diese Legierungen wurden ursprünglich als Gusslegierungen entwickelt und für diese Herstellungsroute optimiert, sie gelten jedoch grundsätzlich als vermindert - oder sogar als gar nicht - schweißbar, da sie zu Rissbildung entweder im Schweißprozess oder aber in der darauffolgenden Wärmebehandlung neigen. Dadurch bestehen erhebliche Herausforderungen bei der defektfreien additiven Verarbeitung solcher Legierungen, so beispielsweise im laserbasierten Pulverbettverfahren (engl. Laser Powder Bed Fusion, LPBF) .

Legierungen, welche erfahrungsgemäß einen hohen Anteil von Gammastrichphase bilden und dementsprechend breite Erstarrungsintervalle haben, neigen verstärkt durch Mikroseigerungseffekte, zu einer Anfälligkeit von Heiß- und Erstarrungsrissbildung während der additiven Verarbeitung. Als Erstarrungs- oder Schmelzintervall bezeichnet man üblicherweise das Temperaturintervall zwischen Solidus- und Liquidustemperatur eines Stoffes, oder einer Stoffphase.

Darüber hinaus führt die anschließende Wärmebehandlung, welche erforderlich ist, um einerseits die gewünschte Mikrostruktur einzustellen, andererseits aber auch, um die prozess-inhärenten Eigenspannungen abzubauen, zu einer weiteren, signifikanten Makrorissbildung aufgrund einer Überlagerung dieser Eigenspannungen mit mikrostrukturellen Eigenspannungen, welche bei der Wärmebehandlung aufgrund der Volumenänderung bei der Ausscheidung der γ'-Phase entstehen ("post weld heat treatment cracking" oder "strain age cracking", SAC).

Ein bestimmungsgemäßer Betrieb der genannten additiv gefertigten Bauteile oder Komponenten aus diesen Legierungen ist daher aufgrund der auftretenden Defekte kaum möglich.

Thermo-mechanisch hochbelastete Turbinen- oder Maschinenkomponenten sind Gegenstand stetiger Verbesserung, um insbesondere ihre Effizienz im Einsatz zu steigern. Bei Wärmekraftmaschinen, insbesondere Gasturbinen, führt dies allerdings unter anderem zu immer höheren Einsatztemperaturen. Die metallischen Materialien und das Komponentendesign hochbelastbarer Bauteile, wie Turbinenlaufschaufeln werden daher ständig hinsichtlich ihrer Festigkeit, Lebensdauer, Kriechbelastbarkeit und thermomechanischer Ermüdung, verbessert.

Die generative oder additive Fertigung wird aufgrund ihres für die Industrie disruptiven Potenzials zunehmend interessant auch für die Serienherstellung dieser Bauteile

Additive Herstellungsverfahren (AM: "additive manufacturing"), umgangssprachlich auch als 3D-Druck bezeichnet, umfassen beispielsweise als Pulverbettverfahren das selektive Laserschmelzen (SLM) oder Lasersintern (SLS), oder das Elektronenstrahlschmelzen (EBM).

Die Herstellung von Gasturbinenschaufeln mittels der beschriebenen pulverbett-basierten Verfahren (LPBF) ermöglicht vorteilhaft die Implementierung von neuen Geometrien, Konzepten, Lösungen und/oder Design, welche die Herstellungskosten bzw. die Aufbau- und Durchlaufzeit reduzieren, den Herstellungsprozess optimieren und darüber eine thermo-mechanische Belastbarkeit der Komponenten verbessern können.

Auf konventionelle Art, beispielsweise gusstechnisch, hergestellte Komponenten, stehen der additiven Fertigungsroute beispielsweise hinsichtlich ihrer Formgebungsfreiheit und auch in Bezug auf die erforderliche Durchlaufzeit und den damit verbundenen hohen Kosten sowie dem fertigungstechnischen Aufwand deutlich nach.

Aktuell sind unterschiedliche Ansätze bekannt und bereits in der Literatur beschrieben, welche eine defekt-reduzierte oder sogar defektfreie additive Verarbeitung von Superlegierungen ermöglichen sollen. Dies beinhaltet die additive Verarbeitung unter erhöhten Temperaturen und/oder die Optimierung der Prozessparameter beim LPBF wie beispielsweise die Laserleistung, Scangeschwindigkeit oder der Spurabstand.

Weiterhin kann eine Wärmebehandlung, beispielsweise um das heißisostatische Pressen (engl. "hot isostatic pressing", HIP) erweitert oder die chemische Zusammensetzung angepasst werden, um die Schweißbarkeit zu verbessern.

Die beiden erstgenannten Ansätze sind jedoch nur in gewissen Grenzen praktikabel. Eine materialspezifische Anpassung der Bestrahlungsparameter ist in jedem Fall erforderlich; dies gilt ebenfalls für Legierungen mit relativ guter Schweißeignung. Je nach Schweißeignung können die Parameter aber nur innerhalb vernünftiger Grenzen überhaupt angepasst werden, nämlich solchen, die überhaupt ein ordentliches Strukturergebnis für das Bauteil erlauben. Eine reine Optimierung der Bauteilstruktur derart, dass eine Heißriss- oder Erstarrungsrissneigung überwunden wird, ist nicht allein über die Anpassung entsprechender Bestrahlungsparameter möglich.

Auch die Anfälligkeit für das "strain age cracking" (SAC) kann hierdurch nicht maßgeblich reduziert werden. Eine additive Verarbeitung unter Anwendung hoher Vorwärmtemperaturen, beispielsweise oberhalb von 1000 °C, ist unter industriellen Bedingungen nicht möglich. Außerdem bestehen technische Limitierungen beispielsweise hinsichtlich der Temperatur und der damit verbundenen Probleme durch Sintereffekte. Ein HIP-Prozess kann zwar bis zu einem gewissen Grad dazu beitragen, in der hergestellten Struktur vorhandene Heiß- oder Erstarrungsrisse zu schließen. Größere, oberflächennahe oder sogar offene Risse an der Bauteiloberfläche können dadurch aber nicht geschlossen oder unschädlich gemacht werden. Vielmehr würden solche Risse im "HIP"-Prozess weiter fortschreiten. Grundsätzlich gilt, dass die additive pulverbett-basierte Verarbeitung (Schweißverarbeitung) entsprechender Materialien aufgrund der beschriebenen Problematik der Rissanfälligkeit entsprechender Legierungen nicht gegeben ist.

Eine geringfügige Anpassung der chemischen Zusammensetzung bereits etablierter Guss- und Schmiedelegierungen ist in der Literatur zur Lösung der beschriebenen Effekte bereits hinlänglich beschrieben und zum Teil auch in die Anwendung überführt. Hierbei handelt es sich üblicherweise um Anpassungen der korngrenzenaktiven Elemente, wie beispielsweise Kohlenstoff (C), Bor (B) oder Zirkonium (Zr) oder vergleichbar Elemente wie Silizium (Si). In der Regel wird eine Reduzierung dieser Elemente angestrebt.

Eine ausscheidungsgehärtete Gamma-Strich-Superlegierung auf Nickelbasis zur Verwendung in einem Verfahren zur pulverbett-basierten additiven Herstellung ist beispielsweise bekannt aus EP 2 886 225 B1.

Ein anderer Ansatz zur Steigerung der Schweißeignung bzw. grundsätzlichen Schweißbarkeit ist die Reduzierung der γ'-Bildner. Mit den besagten Ansätzen geht aber in der Regel eine Änderung der Hochtemperaturfestigkeit und/oder der Kriechbeständigkeit und -duktilität einher. Es ist daher wenig zielführend, geringe Anpassungen der chemischen Zusammensetzungen für Legierungen zu implementieren, die für andere Herstellungsrouten entwickelt wurden.

Mit Ausnahme des Ansatzes von Zhou et al. (Development of a New Alumina-Forming Crack-Resistant High-y' Fraction Ni-Base Superalloy for Additive Manufacturing. In: Tin S. et al. (eds.): Superalloys 2020, The Minerals, Metals & Materials Series) basieren die o.g. Ansätze zudem auf der Anpassung der konventionell bekannten Gusslegierung IN738 LC ("LC" engl. für "low carbon"). Während Zhou et al. basierend auf dem CM247 eine Legierungsmodifikation vornehmen, stellt die vorliegende Erfindung das Resultat eines vollständig unterschiedlichen "ab initio" oder "clean sheet"-Legierungsansatz vor, bei dem eine Legierungszusammensetzung von vornherein gänzlich auf die additive Verarbeitung abgestimmt wurde.

Es ist also Aufgabe der vorliegenden Erfindung, eine deutlich verbesserte und ganzheitlich auf die additive, insbesondere pulverbett-basierte, Verarbeitung abgestimmte Legierungszusammensetzung bereitzustellen, welche erstmalig überhaupt die Schweißeignung der in Rede stehenden Materialklasse gewährleistet und demgemäß für entsprechende additive Herstellungswege verifiziert.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft eine Nickelbasis-Legierung, bzw. Legierungszusammensetzung bzw. eine Vorform einer entsprechenden Nickelbasis-Superlegierung in einem noch nicht (vollständig) geschmolzenen, vorzugsweise pulverförmigen, (Roh-)Zustand, umfassend Nickel als Hauptbestandteil und die weiteren Bestandteile in Gewichtsprozent (Gew.-%): 0,05 bis 0,10 % Kohlenstoff (C), 8 bis 13 % Tantal (Ta), 12 bis 20 % Chrom (Cr), 3 bis 25 % Kobalt (Co), weniger als 0,03 % Mangan (Mn), weniger als 0,03 % Silizium (Si), 0 bis 6 % Molybdän (Mo), weniger als 0,5 % Eisen (Fe), 2 bis 4 % Aluminium (Al), 0,0005 bis 0,1 % Magnesium (Mg), weniger als 0,02 % Vanadium (V), 0 bis 6 % Wolfram (W), weniger als 1 % Titan (Ti), weniger als 0,03 % Yttrium (Y), 0,005 bis 0,015 % Bor (B), weniger als 0,002 % Schwefel (S), 0,005 bis 0,03 % Zirkonium (Zr) und weniger als 3 % Hafnium.

Im Gegensatz hierzu wird in der genannten Veröffentlichung von Zhou et al., in der ein hoher γ'-Volumengehalt von über 50 % und eine geringe Gitterfehlpassung beschrieben ist, der Vorteil von Tantal als γ'-Phase-bildendes Element nicht erkannt und zusätzlich der Einsatz von Niob (Nb) vorgeschlagen. Weiterhin wird ein niedriges Verhältnis von Ta zu der Summe von Aluminium, Niob und Titan (Al+Nb+Ti) suggeriert. Auch wird der technische Effekt von Kobalt nicht erkannt, da auch eine kobaltfreie Legierung nicht ausgeschlossen wird. Auch wird offenbar - im Gegensatz zur vorliegenden Lösung (siehe unten) - auf das Ausbilden einer Aluminiumoxidschicht als Deckschicht abgezielt.

Die vorliegend beschriebene Legierung ermöglicht dagegen vorzugsweise einen mittleren bis großen Volumengehalt an γ'-Phase (Gammastrich-Phase), von beispielsweise circa 30 %, und eine große Gitterfehlpassung (γ/γ'). Weiterhin wird Tantal als das γ'-Phase-bildende Element vorgesehen, wodurch die vorteilhaft langsame Ausscheidungskinetik ausgenutzt werden kann. Weiterhin wird unter anderem Kobalt verwendet, um insbesondere die γ'-Solvustemperatur zu senken, ohne dabei jedoch den Volumenanteil bei der Einsatztemperatur des Bauteils zu verringern. Noch weiterhin wird, statt Aluminium, eine Chromoxidschicht als Deckschicht verwendet (siehe Cr/Al-Verhältnis unten).

In einer Ausgestaltung beträgt vorliegend die Summe von Molybdän und Wolfram 4 % bis 10 %, das Verhältnis von Tantal zu der Summe der Elemente Aluminium, Niob und Titan 1,6 bis 6,5, die Summe von Mangan und Silizium weniger als 0,03 %, und/oder das Verhältnis von Chrom zu Aluminium zwischen 3 und 10.

Ein hohes Maß an Tantal zu restlichen die y'-Phase-bildenden Elementen, wie Aluminium, Titan und Niob, ist von hoher Bedeutung für den Widerstand gegen das "strain age cracking", da Tantal in Nickel deutlich langsamer diffundiert. Nur wenn Tantal zu großen Teilen für die Entstehung der γ'-Phase verantwortlich ist, kann die Ausscheidungskinetik der γ'-Phase verlangsamt werden. Ein Unterschreiten dieses Verhältnisses führt zu einer zu schnellen Ausscheidungskinetik und der Gefahr, dass das hergestellte Bauteil durch SAC versagt. Ein zu hohes Ta/(Al, Ti, Nb)-Verhältnis kann hingegen dazu führen, dass sich schädliche Sekundärphasen (z.B. η-Phasen) bilden.

Aufgrund des gewählten Ansatzes einer langsamen Ausscheidungskinetik, der vorzugsweise durch ein relativ hohes Ta/Al-Verhältnis realisiert wird, ergibt sich ein verhältnismäßig niedriger Al-Gehalt. Durch die langsamere Ausscheidungskinetik entsteht später vorteilhafterweise weniger γ'-Phase während der additiven Verarbeitung und während der anschließenden Wärmebehandlung(en). Daher können die Eigenspannungen, die durch den AM-Prozess entstehen, abgebaut werden, bevor die Überlagerung mit Eigenspannungen durch die γ'-Bildung zu SAC führen. Um weiterhin eine ausreichend hohe Hochtemperaturoxidations- und -korrosionsbeständigkeit zu erzielen, muss auch ein entsprechend hoher Cr-Gehalt gewählt werden, woraus sich das hohe angegebene Cr/Al-Verhältnis ergibt.

Den beiden Elementen Mangan und Silizium wird allgemein eine negative Wirkung auf die Heißrissbeständigkeit zugeschrieben. Literaturberichte deuten jedoch daraufhin, dass Mangan und Silizium einzeln und in geringen Mengen anderweitig eine positive Wirkung auf die gewünschten Eigenschaften erzielen könnten. Aus diesem Grund wird der Gehalt beider Elemente vorzugsweise auf unter 0,03 % beschränkt.

In einer Ausgestaltung umfasst die Legierungszusammensetzung in Gewichtsprozent: 0,05 bis 0,070 % Kohlenstoff, 9 bis 12 % Tantal, 14 bis 16 % Chrom, 8 bis 21 % Kobalt, weniger als 0,01 % Mangan, kein oder nahezu kein Silizium (ggf. bis auf unvermeidbare Reste), 2 bis 3 % Molybdän, weniger als 0,5 % Eisen, 3 bis 3,5 % Aluminium, ca. 0,001 % Magnesium, kein oder nahezu kein Vanadium, 2 bis 3 % Wolfram, kein oder nahezu kein Titan, 0 bis 0,01 % Yttrium, 0,005 bis 0,01 % Bor, kein oder nahezu kein Schwefel, 0,015 bis 0,025 % Zirkonium und weniger als 3 % Hafnium.

Im Gegensatz zu naheliegenden Ansätzen, z.B. der gezielten Anpassung einzelner Elemente einer bestehenden Gusslegierung, wurde vorliegend also ein holistischer neuer Entwicklungsansatz für eine neuartige Nickelbasis-Superlegierung verfolgt, der mehrere Problemstellungen adressiert. Diese Legierung zeichnet sich durch eine gute Verarbeitbarkeit mittels "Additive Manufacturing" aus, da eine vorteilhaft geringe Heißrissneigung ("solidification cracking"), und eine geringe Neigung für Aufhärtrisse ("strain age cracking", SAC), besteht, ohne die damit üblicherweise einhergehende Verminderung der Hochtemperaturfestigkeit. Dies wird, wie vorliegend beschrieben durch eine Mehrzahl von Anpassungen, darunter die Anpassung des Erstarrungsintervalls bzw. deren letztem Verlauf, erreicht und durch eine Mischkristallverfestigung während der additiven Verarbeitung, sodass die Heißrissneigung dadurch reduziert wird.

Weiterhin wird durch die Substitution von üblichen γ'-Bildnern (Ti) die Ausscheidungskinetik der γ'-Phase verlangsamt, sodass im additiven Strahl-Schweißprozess vorzugsweise keine oder keine maßgebliche Ausscheidung erfolgt, und in der anschließenden Wärmebehandlung die schadhafte Überlagerung der prozessinhärenten Eigenspannungen mit den mikrostrukturellen Eigenspannungen, bedingt durch die Volumenänderung durch die Ausscheidung der γ'-Phase, reduziert wird, sodass weiterhin die Neigung zu Rissen durch "strain age cracking" der Legierung reduziert ist.

Weiterhin ermöglicht die vorgestellte Zusammensetzung die Einstellung eines möglichst hohen Anteils der γ'-Phase und einer möglichst hohen γ/γ'-Gitterfehlpassung durch Anpassung typischer und/oder alternativer γ'-Bildner, wodurch eine hohe Festigkeit und Härte der Legierung gewährleistet ist.

Darüber hinaus werden die korngrenzenwirksamen Elemente gezielt angepasst, sodass - bei noch gewährleisteter rissfreier Verarbeitung - keine nachteilige Schwächung der Korngrenzen und somit eine Verminderung der Hochtemperaturfestigkeit erfolgt. Zu diesen Elementen zählen bei Nickelbasislegierungen unter anderem Bor, Kohlenstoff und Zirkonium. Als korngrenzenaktive Elemente reichern sie sich an den Korngrenzen an und festigen diese. Dadurch kann ein Abgleiten der Körner im Betrieb des Bauteils mit Vorteil verhindert werden. Für die additive Fertigung ist eine genaue Abstimmung dieser Elemente mit der Restlegierungszusammensetzung wichtig, da es sonst während der Verarbeitung zu Erstarrungs- oder Wiederaufschmelzrissen kommen kann.

Durch die vorgestellte Legierung wird nicht nur die Schweißbarkeit erstmals ermöglicht, sondern vorzugsweise auch eine hohe Festigkeit, vergleichbar mit derjenigen von Bauteilen aus IN738LC erreicht. Auch zeichnet sich die vorgestellte Legierung durch eine dazu mindestens gleichwertige Korrosions- und Oxidationsresistenz, da die dafür erforderlichen Elemente, insbesondere Cr und Al, in ausreichenden Anteilen in der Legierung vorhanden sind.

In einer Ausgestaltung besteht die Legierung bzw. Legierungszusammensetzung, gegebenenfalls bis auf unvermeidbare Verunreinigungen oder Reste, aus den oben beschriebenen Bestandteilen.

Ein Kohlenstoffgehalt zwischen 0,05 und 0,10 Gew.-% bewirkt eine vorteilhafte Ausformung von Metallkarbiden in solchen Nickelbasislegierungen. Vorliegend bildet Kohlenstoff in der definierten Konzentration vor allem Cr₂₃C₆ und TaC. Da Cr₂₃C₆ sich vor allem an Korngrenzen ausscheidet, hilft es dabei diese zu verfestigen. Metallkarbide wie TaC bilden sich bereits in der Schmelze, binden Tantal und andere Elemente ab, und können ein "Nachspeisen" der Schmelze beeinflussen. Auf diese Art ergibt sich auch ein Einfluss der Karbide auf Erstarrungsrisse.

Tantalkarbid (TaC) ist auch bei hohen Temperaturen stabil und kann durch Wärmebehandlungen nicht vollständig aufgelöst werden. Es behindert also auch bei hohen Temperaturen nahe am Schmelzpunkt noch das Kornwachstum, was für eine hohe Kriechbeständigkeit notwendig ist. Zudem beeinflusst Kohlenstoff das Erstarrungsverhalten nicht nur indirekt durch Karbidbildung, sondern auch direkt, indem es den Schmelzpunkt der Legierung verringert. Ein Bereich von 0,05 bis 0,1 % ist vorteilhaft als guter Kompromiss zwischen den Effekten eines ausreichende Kornwachstums, einer vorteilhaft geringen Erstarrungsrissneigung sowie einer vorteilhaft hohen Korngrenzenkohäsion. Ein Kohlenstoffgehalt von 0,05 % ist besonders bevorzugt, da so ein besonders großes Kornwachstum erzielt und die Legierung insgesamt besonders robust und tolerant für einen großen Bereich von Bestrahlungsparametern bzw. eine besonders robuste Möglichkeit der schweißtechnischen Verarbeitung (Prozessfenster) definiert werden kann.

Ein Aluminiumgehalt zwischen 2,0 und 4,0 Gew.-% ist für die Bildung der γ'-Phase (vorzugsweise Ni₃Al) notwendig. Ein zu hoher Aluminiumgehalt führt jedoch zu einem (zu) hohen γ'-Gehalt oder -Volumenanteil, der sich negativ auf das "strain age cracking" bei Wärmebehandlungen auswirkt.

Neben Aluminium bildet auch Tantal die γ'-Phase, diffundiert jedoch deutlich langsamer. Um die Kinetik der γ'-Phase niedrig zu halten, ist deshalb ein hohes Ta/Al-Verhältnis vorteilhaft, weshalb der Aluminiumgehalt ebenfalls begrenzt werden muss. Ein Gehalt von unter 2 % Aluminium würde zu einem zu geringen Anteil der γ'-Phase führen, was unzureichende mechanische Eigenschaften zur Folge hätte. Ein Gehalt von ca. 3% Aluminium führt zu einem ausreichenden γ'-Phasenanteil bei gleichzeitig geringer SAC-Neigung, weshalb dieser Gehalt besonders bevorzugt ist. Ein Anheben des Aluminiumanteils ist dann denkbar, wenn sich die SAC-Neigung individuell als ausreichend gering herausstellt.

Der angegebene Tantalgehalt liegt zwischen 8,0 und 13,0 Gew.-%. Tantal ist neben Aluminium das zweite γ'-bildende Element. Ein zu hoher Tantalgehalt führt zur Bildung unerwünschter Phasen, wie der η-Phase, weshalb der Gehalt begrenzt werden muss. Im Zusammenspiel mit Kobalt, was Tantal aus der γ'-Matrix verdrängt, lassen sich die mechanischen Eigenschaften gezielt einstellen. Je höher der Tantalgehalt dabei gewählt wird, desto niedriger muss vorzugsweise der Kobaltgehalt gewählt werden, und umgekehrt. Ein Gehalt von unter 8 % Tantal führt in der Legierungsstruktur zu einem zu geringen Anteil der γ'-Phase, was unzureichende mechanische Eigenschaften zur Folge hat. Ein Tantalanteil von 9 % wird besonders bevorzugt, da damit eine ausreichende Festigkeit ohne Rissbildung erzielt werden kann.

Wie bereits beschrieben, wird der Kobaltgehalt vorzugsweise gegenläufig zu dem Tantalgehalt abgestimmt. Ein zu hoher Kobaltgehalt führt zu unerwünschten Phasen. Und ein zu geringer Kobaltgehalt führt zu einer zu geringen Festigkeit. Zudem beeinflussen Kobalt und Tantal das Erstarrungsintervall, was den Maximalgehalt ebenfalls einschränkt. In Kombination mit 9 % Tantal haben sich 19 % Kobalt als besonders vorteilhaft herausgestellt, da ansonsten die Festigkeit zu niedrig ist. Bei höheren Tantalgehalten muss der Kobaltgehalt entsprechend verringert werden, wobei 3 % die untere Grenze für einen ausreichend hohen Verdrängungseffekt ist.

Titan ist neben Tantal ebenfalls ein γ'-Bildner. Da die Diffusionsgeschwindigkeit jedoch deutlich höher als die von Tantal ist, wird Tantal bevorzugt. Titan kann die Oxidationsbeständigkeit von Nickelbasislegierungen herabsetzen, was ebenfalls dazu beiträgt, dass der Titangehalt auf weniger als 1 % begrenzt ist. Titan wird vorzugsweise nicht hinzulegiert, da auch ohne Titan eine ausreichende Festigkeit erreicht werden kann.

Vanadium ist neben Aluminium, Tantal und Titan ebenfalls ein γ'-Bildner. Da es jedoch die Oxidationsbeständigkeit stark herabsetzt, wird der Gehalt auf unter 0,02 % begrenzt oder bevorzugt ganz auf Vanadium verzichtet.

Chrom wird als Oxidschichtbildner eingesetzt und bildet eine Cr₂O₃ Deckschicht die bis ca. 900°C stabil ist. Dies ist notwendig, da ein ausreichend hoher Aluminiumgehalt für eine Al₂O₃-Deckschichtbildung aufgrund der SAC-Neigung nicht realisiert werden kann. In der Regel gilt, dass je höher der Chromgehalt ist, desto besser auch die Beständigkeit der Deckschicht ist. Begrenzt wird der Chromgehalt durch das Auftreten unerwünschter Phasen. Zurzeit sind 14 Gew.-% Chrom besonders bevorzugt, da sich die Legierung damit gut herstellen lässt und hinreichend robust gegenüber unerwünschten Phasen ist.

Es hat sich gezeigt, dass ein erhöhter Chromgehalt sich ebenfalls positiv auf die Erstarrungsrissneigung auswirkt, indem es dafür sorgt, dass die letzten 10% des Erstarrungsintervalls schneller durchlaufen werden können. Da das Erhöhen des Chromgehalts weiterhin zu einer erhöhten Oxidationsbeständigkeit führt, ist ein weiteres Erhöhen des Chromgehalts denkbar. Rechnerisch ändert sich das Erstarrungsverhalten der Legierung mit dem Erhöhen des Chromgehalts auf über 18 % nicht. Sofern dann weitere Elemente nicht reduziert werden, bilden sich bei über 20 % Chrom jedoch unerwünschte Phasen, wie die σ-Phase. Aus diesem Grund liegt der maximale Chromgehalt vorzugsweise bei 20 %. Legierungen mit einer ähnlichen Einsatztemperatur weisen für eine ausreichende Oxidationsbeständigkeit mindestens 12 % Chrom auf, weshalb dieser Wert wiederum als unterste Grenze angenommen wird.

Eisen bildet mit Molybdän und Wolfram unerwünschte TCP-Phasen (engl. für "topologically close packed"; auch bekannt als Frank-Kasper-Phasen) und beeinflusst die Eigenschaften der Legierungen ansonsten nicht positiv, weshalb es als Legierungselement nicht in Betracht gezogen und sein Gehalt auf unter 0,05 % gehalten, oder auf unter 0,05 % begrenzt wird. Bevorzugt wird auf Eisen sogar vollständig verzichtet. TCP-Phasen gehören zu einer großen Gruppe intermetallischer Phasen, die durch ihre komplexe Kristallstruktur und physikalischen Eigenschaften bekannt sind. Insbesondere weisen diese Phasen eine Kombination periodischer als auch aperiodischer Strukturen auf.

Molybdän und Wolfram dienen in Nickelbasislegierungen aufgrund ihrer hohen Atomradien als mischkristallverfestigende Elemente. Ein zu hoher Gehalt führt zur Bildung von unerwünschten TCP-Phasen, weshalb der Gehalt auf max. 10 % begrenzt wird. Da eine erhöhte Festigkeit der γ-Matrix sich durch Mischkristallverfestigung positiv auf die Erstarrungsrissneigung auswirken kann und zudem weitere technische Vorteile hat, enthält die vorliegende Legierung in Summe vorzugsweise mindestens 4 Gew.-% beider Elemente. Beide Elemente zeigen, zumindest theoretisch, individuelle Vorzüge. Auf der einen Seite seigert Molybdän stärker als Wolfram, auf der anderen Seite hebt es die Solidustemperatur der Restschmelze an. Wolfram hingegen seigert weniger und führt somit in der Restschmelze nicht zur Bildung ungewollter Phasen.

Magnesium dient dazu, Schwefel in der Schmelze abzubinden, was vor allem bei der Pulverherstellung und hinsichtlich der Schweißbarkeit wichtig ist. Der Magnesiumgehalt muss möglichst mit dem Schwefelgehalt abgestimmt werden und sollte zwischen 0,0005-0,01 Gew.-% liegen, sodass so wenig wie möglich freies Magnesium und Schwefel in der Legierung verbleiben.

Yttrium wird in einigen hitzebeständigen Ni-Basis-Legierungen eingesetzt, um die Deckschichthaftung, und dadurch die zyklische Oxidationsbeständigkeit, zu verbessern. Yttrium ist ein oxidbildendes Element und diffundiert sehr langsam. Yttriumoxide sind weiterhin sehr temperaturstabil und führen zu einer starken Versetzungsverankerung. Langsame Diffusion und besonders starke Verankerung der Versetzungen an Korngrenzen kann die Haftfestigkeit von Grenzflächen verbessern und zu einer reduzierten Rissneigung führen. Außerdem ist Yttrium - ähnlich wie Magnesium - in der Lage, Schwefel abzubinden und hat somit einen positiven Effekt auf die Schweißbarkeit.

Bor dient der Korngrenzenkohäsion und hat einen sehr positiven Einfluss auf die Kriechbeständigkeit. Allerdings zeigt sich, dass ein Erhöhen des Borgehalts auf über 0,015 Gew.-% (entspricht 150 ppm) zu massiven Erstarrungsrissen während des AM-Prozesses führt. Ein Borgehalt unter 0,005 Gew.-% (entspricht 50 ppm) hinterlässt indes zu schwache Korngrenzen, sodass SAC bei der additiven schweißtechnischen Verarbeitung bzw. anschließenden Wärmebehandlungen auftritt. Ein Borgehalt von 70 ppm ist besonders bevorzugt, da es ein vorteilhaft großes und stabiles Prozessfenster bzw. eine robuste Verarbeitung ermöglicht und dabei für eine ausreichende Korngrenzenkohäsion sorgt.

Zirkonium (Zirkon) wird gemeinhin die Neigung zugeschrieben, Erstarrungsrisse bzw. Heißrisse während des AM-Prozesses, unter anderem in IN738LC, hervorzurufen, weshalb dieses Element häufig stark reduziert bereitgestellt wird, um die Herstellbarkeit zu verbessern. Es hat sich jedoch gezeigt, dass das Hinzulegieren von 200 ppm Zirkonium bei einem Borgehalt von 70 ppm einen positiven Einfluss auf die Herstellbarkeit hat, und das Prozessfenster vergrößert. Da es wie Bor zudem ein korngrenzenaktives Element ist, das die Korngrenzenkohäsion erhöht, wird ein Mindestgehalt von 50 ppm Zirkonium bevorzugt. Da nicht ausgeschlossen werden kann, dass ein erhöhter Zirkongehalt die Herstellbarkeit negativ beeinflusst, wird der maximale Zirkongehalt mit etwa 300 ppm bemessen.

Da Bor und Zirkonium ähnlich wirken, wird ebenfalls eine Summe dieser beiden Elemente auf einen Bereich zwischen 100 und 300 ppm begrenzt. Ein Unterschreiten dieser Summe führt dabei zu einer nicht ausreichenden Korngrenzenkohäsion und ein Überschreiten zur Gefahr der Heißrissbildung. Ein Zirkoniumgehalt von 200 ppm bei 70 ppm Bor wird als vorteilhaft sowohl für die Korngrenzenkohäsion als auch die schweißtechnische Herstellbarkeit angesehen.

Schwefel (S) hat stark abträgliche Auswirkungen auf die Eigenschaften von Nickelbasislegierungen und muss deshalb mindestens auf einen Gehalt von unter 0,002 %, oder weniger reduziert werden.

Hafnium wird häufig in gerichtet erstarrten Nickelbasislegierungen eingesetzt, um die Querduktilität zwischen den Körnern zu erhöhen. In additiv gefertigten Nickelbasislegierungen hat sich jedoch gezeigt, dass ein Gehalt unter 3 % zu einer deutlichen Verbesserung der Erstarrungsrissbeständigkeit führen, und ebenfalls mechanische Eigenschaften verbessern kann. Jedoch ist der optimale Gehalt schwierig einstellbar, da bereits geringe Abweichungen selbst innerhalb des gewählten Intervalls zu einer deutlichen Verschlechterung der Erstarrungsrissbeständigkeit führen können.

In einer Ausgestaltung der beschriebenen Legierung bzw. Legierungszusammensetzung beträgt der Kohlenstoffgehalt etwa 0,05 Gew.-%, der Tantalgehalt ca. 9 Gew.-%, der Kobaltgehalt 19 Gew.-%, der Chromgehalt 14 Gew.-%, der Zirkoniumgehalt 0,02 Gew.-% bei einem Borgehalt von 0,007 Gew.-%.

In einer Ausgestaltung wird oder ist der Kobaltgehalt so gewählt, dass keine unerwünschten Sekundärphasen, insbesondere keine η-Phase in der gewünschten finalen Legierungsform, welche im endgültigen Bauteil vorliegt, entsteht.

In einer Ausgestaltung wird oder ist der Chromgehalt so gewählt, dass sich eine stabile Chromoxidschicht (siehe oben) ausbildet.

In einer Ausgestaltung liegt die Legierung bzw. Legierungszusammensetzung in Pulverform vor.

In einer Ausgestaltung wird das Pulver der Legierung durch Gasverdüsung oder Fluidverdüsung, vorzugsweise mit den weiter unten beschriebenen Parametern, hergestellt.

In einer Ausgestaltung umfasst die Legierungszusammensetzung 9 bis 10 Gew.-% Tantal und 17 bis 21 Gew.-% Kobalt. Diese Variante (weniger Tantal) zeichnet sich durch eine verbesserte Produzier- oder Prozessierbarkeit und eine vorteilhaft geringere SAC-Neigung aus, die aus einem geringeren γ'-Anteil resultiert.

In einer alternativen Ausgestaltung umfasst die Legierungszusammensetzung 10 bis 12 Gew.-% Tantal und 8 bis 10 Gew.-% Kobalt. Diese Variante (mehr Tantal) bildet hingegen einen höheren Anteil an γ'-Phase und bedeutet daher eine höhere Hochtemperaturfestigkeit bei einer gleichzeitig, aber auch größeren SAC-Neigung.

In einer Ausgestaltung beträgt weiterhin ein Bestandteil der Summe von Bor und Zirkonium 0,01 bis 0,035 Gew.-%.

In einer Ausgestaltung weist die Legierungszusammensetzung - im Gegensatz zu vergleichbaren und/oder konventionellen Legierungen - eine reduzierte γ'-Solvustemperatur auf.

Ein weiterer Aspekt der vorliegenden Erfindung betrifft eine Verwendung der Legierung bzw. Legierungszusammensetzung in einem additiven Herstellungsverfahren, vorzugsweise laserbasierten und/oder pulverbett-basierten Verfahren, wie SLM, SLS und/oder EBM.

Ein weiterer Aspekt der vorliegenden Erfindung betrifft ein Verfahren zur additiven Herstellung eines Bauteils, wobei ein Pulver aus der beschriebenen Legierung bzw. Legierungszusammensetzung mittels eines Lasers oder Elektronenstrahls zumindest teilweise (selektiv und/oder partiell) aufgeschmolzen wird, um das Bauteil schichtweise herzustellen.

In einer Ausgestaltung wird eine fertig (additiv) aufgebaute Struktur, insbesondere nach einem heißisostatischen Pressvorgang, einer Ausscheidungs-Wärmebehandlung, umfassend ein Lösungsglühen, eine Abkühlung und eine thermische Auslagerung unterzogen, um eine Ausscheidungshärtung zu bewirken.

In einer Ausgestaltung umfasst das Lösungsglühen einen Wärmebehandlungsschritt für einen Zeitraum zwischen 2 und 8 Stunden und in einem Temperaturintervall zwischen 1100 °C und 1300 °C.

Ein weiterer Aspekt der vorliegenden Erfindung betrifft eine Zwischenlegierung, vorzugsweise eine direkt aus dem additiven Herstellungsprozess hervorgegangene Struktur aus verfestigtem Pulver, umfassend eine Legierungszusammensetzung, wie oben beschrieben, wobei die Zwischenlegierung frei oder nahezu frei von γ'-Phasenausscheidungen ist. Diese Eigenschaft erlaubt gerade die Schweißbarkeit aufgrund der vorliegend beschriebenen Wirkzusammenhänge in der Legierungsformulierung.

Ein weiterer Aspekt der vorliegenden Erfindung betrifft ein Bauteil, welches aus der beschriebenen Legierung bzw. Legierungszusammensetzung hergestellt ist, dessen Struktur weiterhin einen hohen Anteil einer Gammastrichphase oder Ausscheidungsphase umfasst und insbesondere eine erhöhte, γ/γ'- Gitterfehlanpassung aufweist.

Ausgestaltungen, Merkmale und/oder Vorteile, die sich vorliegend auf die Legierungszusammensetzung bzw. die entsprechende Superlegierung beziehen, können ferner die additive Verarbeitung bzw. Verwendung der Zusammensetzung direkt oder das entsprechend hergestellte Bauteil betreffen, und umgekehrt.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Weitere Einzelheiten der Erfindung werden nachfolgend anhand der Figuren beschrieben.
Figur 1 zeigt diagrammatisch die Abhängigkeit des Diffusionskoeffizienten verschiedener Legierungselement-Bestandteile von der (inversen) Temperatur.
Figur 2 zeigt in einem vereinfachten Phasendiagramm, die Verschiebung eines γ/γ'-Phasengebietes in Abhängigkeit vom Tantalgehalt einer Legierung und der Temperatur, parametrisiert durch den partiellen Kobaltgehalt (Gehalte in Gewichtsprozent) .
Figur 3 zeigt diagrammatisch die Abhängigkeit der sogenannten Vickershärte über dem Kobaltgehalt in Gewichtsprozent einer Legierung bei gegebenem Tantalgehalt.

Darstellungen in den Figuren sind zum Teil lediglich schematisch oder beispielhaft und sollen komplexe technische Wirkzusammenhänge der vorliegenden Erfindung lediglich verdeutlichen, ohne Anspruch auf Vollständigkeit.

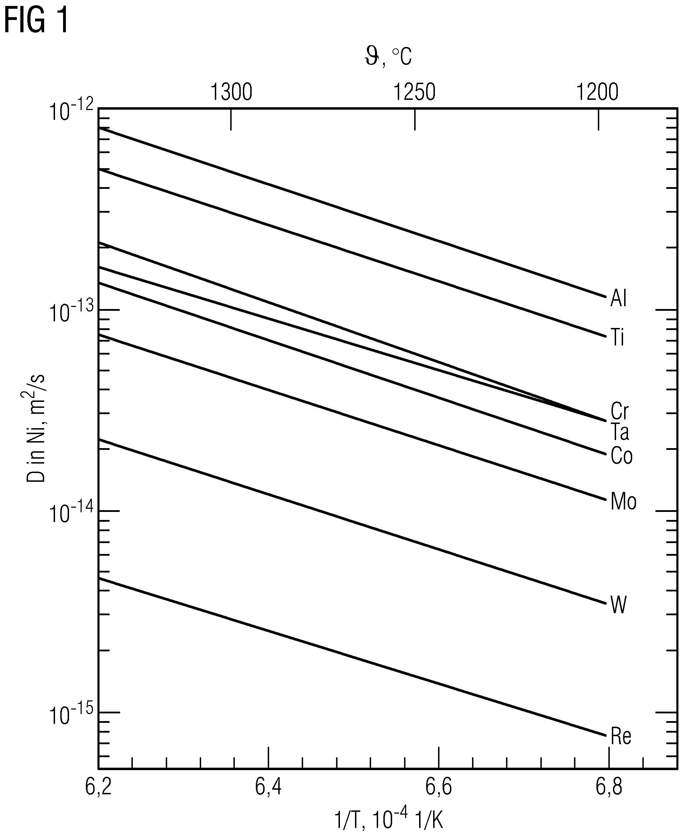

Figur 1 zeigt ein beispielhaftes Diagramm, welches die Abhängigkeit eines Diffusionskoeffizienten D (logarithmisch) von Legierungselementen in Nickel über der logarithmischen inversen Temperatur (unten) und der Temperatur in °C (oben) zeigt.

Insbesondere wird so das Festkörper-Diffusionsverhalten von Rhenium, Wolfram, Molybdän, Kobalt, Tantal, Chrom, Titan und Aluminium in einer Nickelbasislegierung quantifiziert. Unter anderem ist zu erkennen, dass Tantal als γ'-Bildner beispielsweise in einem Temperaturbereich zwischen 1200 °C und 1300 °C aufgrund des kleineren Diffusionskoeffizienten im Vergleich zu Titan und Aluminium deutlich weniger diffundiert. Dieser Zusammenhang führt zu den vorteilhaften thermomechanischen Eigenschaften der vorgestellten Legierungszusammensetzung. Insbesondere kann durch die langsamere oder schwächere Diffusion ebenfalls die Ausscheidungskinetik der Gammastrichphase verlangsamt und die Rissneigung hinsichtlich SAC deutlich reduziert werden. Figur 1 kann ganz oder teilweise Ergebnisse von "Thermo-Calc"-Simulationen beschreiben.

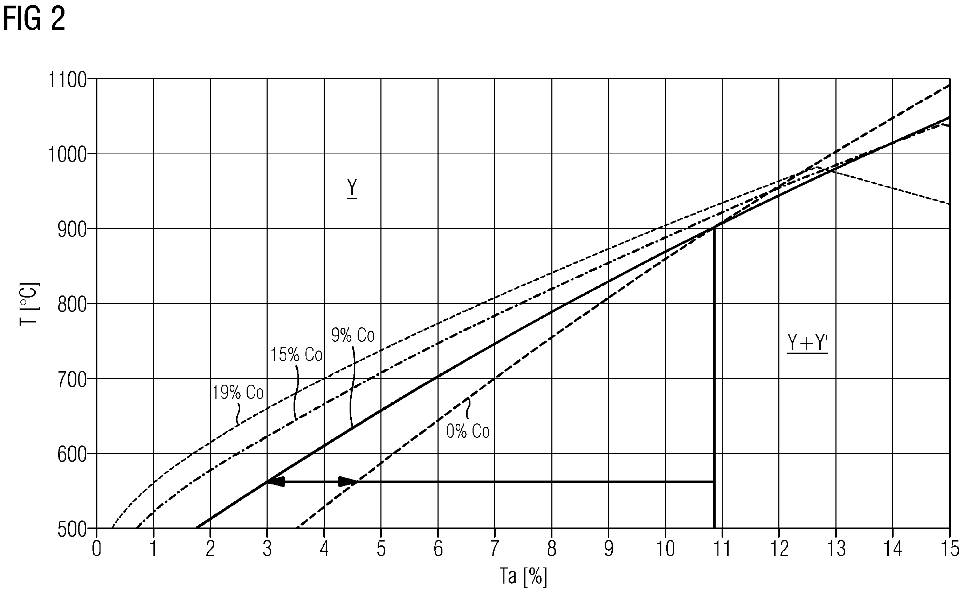

Die Figur 2 zeigt in einem schematischen Phasendiagramm die Verschiebung des γ/γ'-Ausscheidungsphasengebietes abhängig von der Temperatur bzw. technische Synergie-Effekte der Elemente Kobalt und Tantal in der vorgestellten Legierungszusammensetzung.

Kobalt provoziert - bei gegebenem γ'-Gehalt - die Reduktion der γ'-Solvustemperatur. Eine niedrigere γ'-Solvustemperatur führt zu einer langsameren γ'-Ausscheidungskinetik und einer geringeren γ'-Bildungstriebkraft. Dies verringert ebenfalls die Neigung zu SAC wie oben bereits beschrieben wurde. Andererseits ist es möglich, bei gegebener γ'-Solvustemperatur den γ'-Gehalt bei Einsatztemperaturen des entsprechenden Bauteils zu erhöhen. Kobalt verdrängt Tantal aus der γ-Matrix in die γ'-Phase, wodurch sich der γ'-Gehalt steigern lässt. Zudem führt es durch die Verdrängung zu einer erhöhten γ/γ'-Gitterfehlpassung, was zu einer Festigkeitssteigerung durch die γ'-Phase führt. Zur Verdeutlichung des beschriebenen Effekts von Kobalt anhand von Figur 2, lässt sich insbesondere der Bereich zwischen 0 und 9 % Co betrachten (vgl. Doppelpfeil), da entsprechend zusammengesetzte Legierungen bei einem Maß von circa 11 % Tantal (vgl. vertikale Linie) etwa die gleiche Solvustemperatur haben. Bei 9 % Kobalt ist jedoch der γ'-Anteil bei moderaten Temperaturen höher als bei einem Nullanteil von Kobalt (vgl. horizontale Linie). Die in Fig. 2 eingezeichneten Linien verdeutlichen also die Verlagerung des γ/γ'-Phasengebietes hin zu einem größeren γ'-Anteil bei gleicher Solvustemperatur. Kobalt an sich reduziert also nicht notwendigerweise direkt die γ'-Solvustemperatur, ermöglicht es aber, weniger Tantal zu verwenden, und somit den gleichen γ'-Anteil bei geringerer Solvustemperatur zu erreichen. Das Erhöhen des Co-Anteils auf 15 % würde es beispielsweise ermöglichen, Ta von 11 % auf 9 % abzusenken und dabei noch einen γ'-Anteil von über 20 % einzustellen und die Solvustemperatur ggf. abzusenken.

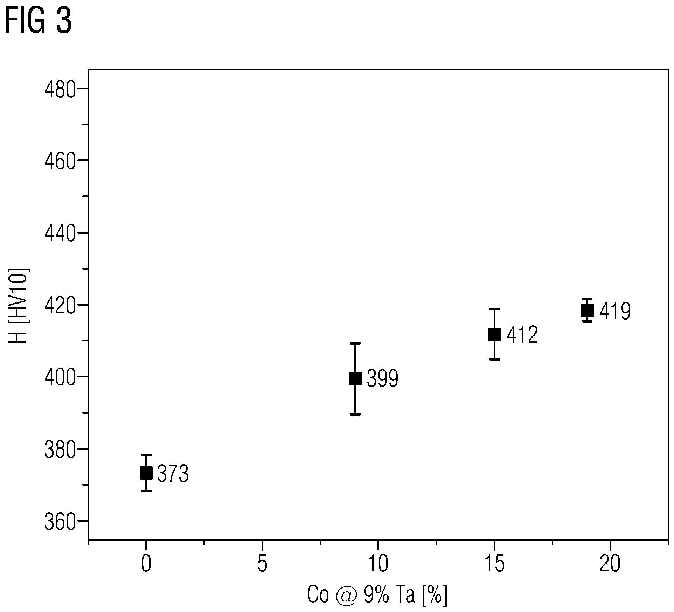

Figur 3 zeigt die Abhängigkeit der sogenannten Vickershärte H über dem Kobaltgehalt einer Legierung bei einem Tantalgehalt von 9 Gew.-%. Die Auswirkungen des beschriebenen Verdrängungseffekts äußern sich in Form einer ansteigenden Härte mit steigendem Co-Gehalt der Legierung. Zusätzlich verändert sich die Morphologie der γ'-Phase durch Erhöhen des Co-Gehalts von kugelförmig zu kubisch (vorliegend nicht explizit in den Figuren gekennzeichnet). Dies indiziert, dass sich der Ta-Gehalt in der γ'-Phase mit steigendem Co-Gehalt erhöht, somit die Gitterfehlpassung ansteigt und deshalb die Umwandlung der Morphologie der γ'-Phase von kugelförmig zu kubisch schneller abläuft.

An den eigentlichen additiven Herstellungsprozess eines Bauteils aus der Legierung, wodurch eine Art (selektiv aufgeschmolzene) Zwischenlegierung entsteht, schließen sich üblicherweise eine oder mehrere Wärmebehandlungen an, um ein geeignetes Gefüge einzustellen. Der erste Schritt der Wärmebehandlungskette ist vorzugsweise ein HIP-Prozess, um prozessbedingte Porositäten zu schließen. Die gewählte Temperatur entspricht hier vorzugsweise einer Lösungsglühung, die idealerweise über der γ'-Solvus- und unter der Solidustemperatur durchgeführt wird, beispielsweise zwischen 1100 °C und 1300 °C. Da der HIP-Prozess üblicherweise nur ein langsames Abkühlen zulässt, folgt vorzugsweise eine erneute Lösungsglühung im Vakuum oder unter Schutzgasatmosphäre für beispielsweise 2 bis 8 Stunden zwischen ebenfalls 1100 °C und 1300 °C mit einer anschließenden schnellen Abkühlung. Für eine optimale Kriechbeständigkeit folgt auf das Lösungsglühen ein einfaches oder mehrfaches Auslagern bei Temperaturen zwischen 700 °C bis 950 °C für beispielsweise 12 bis 48 Stunden.

Die Herstellung eines Pulvers der vorliegend beschriebenen Legierung bzw. Legierungszusammensetzung erfolgt vorzugsweise in einer Vakuuminertgasverdüsungsanlage. In dieser Anlage wird die Legierung in einem sogenannten VIM-Ofen erschmolzen und die flüssige Schmelze für 20 min bis 2 Stunden zur Homogenisierung gehalten. Die Schmelze wird in einen Gießtrichter geleitet, der zu einer Gasdüse führt, in der das erschmolzene Metall unter hohem Druck von 5 bis 100 bar mit Inertgas zu Metallpartikeln verdüst wird. Die Schmelze wird im Schmelztiegel bei 5 bis 400 °C oberhalb des Schmelzpunktes erhitzt. Die Metallflussrate bei der Verdüsung beträgt 0,5 bis 80 kg/min und die Gasflussrate 2 bis 150 m³/min. Durch die schnelle Abkühlung erstarren die Metallpartikel in Kugelform (sphärische Teilchen). Das bei der Verdüsung verwendete Inertgas kann bedarfsweise 0,01 bis 100 % Stickstoff enthalten. In einem Zyklon wird dann die Gasphase vom Pulver getrennt und anschließend das Pulver verpackt.

Dabei haben die Partikel eine Größe (Durchmesser) von 5 µm bis 250 µm, Gaseinschlüsse von 0,0 bis 4 % der Porenfläche (Poren kleiner als 1 µm) im Verhältnis zur Gesamtfläche ausgewerteter Objekte, eine Schüttdichte von 2 bis zur Dichte der Legierung von ca. 8.5 g/cm³ und sind unter einer Schutzgasatmosphäre mit Argon luftdicht verpackt.

Der Spreizungsbereich für die Partikelgröße des Pulvers liegt zwischen 5 und 250 µm, wobei bevorzugte Bereiche zwischen 5 und 150 µm, bzw. zwischen 10 und 150 µm liegen. Die bevorzugten Bereiche werden durch Abtrennen von zu feinen und zu groben Teilchen mittels Sieb- und Sicht-Prozess durchgeführt. Diese Prozesse werden unter Schutzgasatmosphäre durchgeführt und können einmalig oder mehrmals durchgeführt werden. Das Inertgas bei der Pulverherstellung kann wahlweise Argon bzw. ein Gemisch aus Argon mit 0,01 bis unterhalb von 100 % Stickstoff sein. Alternativ kann das Inertgas wahlweise Helium sein. Das Inertgas soll bevorzugt eine Reinheit von mindestens 99,996 Vol.% haben. Insbesondere soll der Stickstoffgehalt 0 bis 10 ppmv, der Sauerstoffgehalt von 0 bis 4 ppmv und der H₂O-Gehalt weniger als 5 ppmv betragen.

Bei dem auf additivem Wege aus einem solchen Legierungspulver hergestellten Bauteil kann es sich um ein Bauteil einer Strömungsmaschine, beispielsweise um ein Bauteil für den Heißgaspfad einer Gasturbine, handeln. Insbesondere kann das Bauteil eine Lauf- oder Leitschaufel, ein Ringsegment, ein Brennerteil oder eine Brennerspitze, eine Zarge, eine Schirmung, ein Hitzeschild, eine Düse, eine Dichtung, einen Filter, eine Mündung oder Lanze, einen Resonator, einen Stempel oder einen Wirbler bezeichnen, oder einen entsprechenden Übergang, Einsatz, oder ein entsprechendes Nachrüstteil.

## Patentansprüche

1. Nickelbasis-Legierungszusammensetzung, umfassend Nickel als Hauptbestandteil und die weiteren Bestandteile in Gew.-%:
| | |
|---|---|
| 0,05 bis 0,10 % | Kohlenstoff, |
| 8 bis 13 % | Tantal, |
| 12 bis 20 % | Chrom, |
| 3 bis 25 % | Kobalt, |
| weniger als 0,03 % | Mangan, |
| weniger als 0,03 % | Silizium, |
| 0 bis 6 % | Molybdän, |
| weniger als 0,5 % | Eisen, |
| 2 bis 4 % | Aluminium, |
| 0,0005 bis 0,1 % | Magnesium, |
| weniger als 0,02 % | Vanadium, |
| 0 bis 6 % | Wolfram, |
| weniger als 1 % | Titan, |
| weniger als 0,03 % | Yttrium, |
| 0,005 bis 0,015 % | Bor, |
| weniger als 0,002 % | Schwefel, |
| 0,005 bis 0,03 % | Zirkonium und |
| weniger als 3 % | Hafnium, wobei weiterhin die |
- Summe von Molybdän und Wolfram 4 bis 10 %,
- das Verhältnis von Tantal zu der Summe von Aluminium, Niob und Titan 1,6 bis 6,5,
- die Summe von Mangan und Silizium weniger als 0,03 %, und
- das Verhältnis von Chrom zu Aluminium 3 bis 10 beträgt.

2. Legierungszusammensetzung nach Anspruch 1, welche in Gew.-%:
| | |
|---|---|
| 0,05 bis 0,070 % | Kohlenstoff, |
| 9 bis 12 % | Tantal, |
| 14 bis 16 % | Chrom, |
| 8 bis 21 % | Kobalt, |
| weniger als 0,01 % | Mangan, |
| nahezu kein % | Silizium, |
| 2 bis 3 % | Molybdän, |
| weniger als 0,5 % | Eisen, |
| 3 bis 3,5 % | Aluminium, |
| ca. 0,001 % | Magnesium, |
| nahezu kein | Vanadium, |
| 2 bis 3 % | Wolfram, |
| nahezu kein | Titan, |
| 0 bis 0,01 % | Yttrium, |
| 0,005 bis 0,01 % | Bor, |
| kein oder nahezu kein | Schwefel, |
| 0,015 bis 0,025 % | Zirkonium und |
| weniger als 3 % | Hafnium umfasst. |

3. Legierungszusammensetzung nach Anspruch 1 oder 2, welche - bis auf unvermeidbare Verunreinigungen aus diesen Bestandteilen besteht.

4. Legierungszusammensetzung nach einem der vorhergehenden Ansprüche, wobei der Kobalt-Gehalt so gewählt ist, dass keine unerwünschten Sekundärphasen, insbesondere keine η-Phase, entstehen.

5. Legierungszusammensetzung nach einem der vorhergehenden Ansprüche, wobei der Chrom-Gehalt so gewählt ist, dass sich eine stabile Chromoxidschicht ausbildet.

6. Legierungszusammensetzung nach einem der vorhergehenden Ansprüche, welche in Gew.-%: 9 bis 10 % Tantal und 17 bis 21 % Kobalt umfasst.

7. Legierungszusammensetzung nach einem der Ansprüche 1 bis 5, welche in Gew.-%: 10 bis 12 % Tantal und 8 bis 10 % Kobalt umfasst.

8. Legierungszusammensetzung nach einem der vorhergehenden Ansprüche, wobei weiterhin ein Bestandteil der Summe von Bor und Zirkonium 0,01 bis 0,035 Gew.-% beträgt.

9. Legierungszusammensetzung einem der vorhergehenden Ansprüche, welche in Pulverform vorliegt.

10. Legierungszusammensetzung einem der vorhergehenden Ansprüche, welche - im Gegensatz zu vergleichbaren und/oder konventionellen Legierungen - eine reduzierte γ'-Solvustemperatur aufweist.

11. Verwendung einer Legierungszusammensetzung nach einem der vorhergehenden Ansprüche in einem additiven Herstellungsverfahren, insbesondere Pulverbettverfahren.

12. Verfahren zur additiven Herstellung eines Bauteils, wobei ein Pulver aus der Legierungszusammensetzung nach einem der vorhergehenden Ansprüche mittels eines Lasers oder Elektronenstrahls zumindest teilweise aufgeschmolzen wird, um das Bauteil schichtweise herzustellen.

13. Verfahren gemäß Anspruch 12, wobei eine fertig aufgebaute Struktur, insbesondere nach einem heißisostatischen Pressvorgang, einer Ausscheidungs-Wärmebehandlung, umfassend ein Lösungsglühen, eine Abkühlung und eine thermische Auslagerung, unterzogen wird, um eine Ausscheidungs-Härtung zu bewirken.

14. Verfahren gemäß Anspruch 13, wobei das Lösungsglühen einen Wärmebehandlungsschritt für einen Zeitraum zwischen 2 und 8 Stunden und zwischen 1100 °C und 1300 °C umfasst.

15. Zwischenlegierung gemäß Anspruch 12, umfassend eine Legierungszusammensetzung nach einem der Ansprüche 1 bis 10, wobei die Zwischenlegierung frei von γ/γ'- Phasenausscheidungen ist.

16. Bauteil hergestellt aus einer Nickelbasis-Superlegierung der Legierungszusammensetzung nach einem der Ansprüche 1 bis 10, dessen Struktur einen hohen γ'-Anteil umfasst, insbesondere mit einer erhöhten γ/γ'-Gitterfehlpassung.
